# EUROPÄISCHE PATENTSCHRIFT

(11) **EP 0 844 132 B1**
(45) Veröffentlichungstag und Bekanntmachung des Hinweises auf die Patenterteilung: **18.04.2001**
(21) Anmeldenummer: 97116826.5
(22) Anmeldetag: 27.09.1997
(51) Int. Cl.: B60N 2/06

(54) **Längsverstellvorrichtung für Sitze, insbesondere Kraftfahrzeugsitze**
Longitudinal adjusting arrangement for seats, particularly for vehicle seats
Dispositif de déplacement longitudinal pour sièges, en particulier pour sièges de véhicules

(30) Priorität: 16.11.1996 DE 19647448
(43) Veröffentlichungstag der Anmeldung: 27.05.1998
(73) Patentinhaber: Keiper GmbH & Co., 42855 Remscheid (DE)
(72) Erfinder: Schüler, Rolf, 42579 Heiligenhaus (DE); Flick, Joachim, 42499 Hückeswagen (DE)
(74) Vertreter: Mentzel, Norbert, Dipl.-Phys.

(56) Entgegenhaltungen:
- DE-A- 3 226 198
- DE-C- 4 241 369
- US-A- 2 850 074
- US-A- 4 143 911
- US-A- 5 383 640

## Beschreibung

Die Erfindung betrifft eine Längsverstellvorrichtung für Sitze, insbesondere Kraftfahrzeugsitze, deren mit einer in wählbaren Neigungslagen einstellbare Rückenlehne mit einem Sitzteil schwenkbar verbunden ist, und der Sitzteil an Laufschienen befestigt ist, wobei jede Laufschiene in einer am Fahrzeugboden festgelegten Führungsschiene längsverschiebbar ist und wenigstens eine Laufschiene mittels einer Sperreinrichtung in wählbaren Längslagen an der Führungsschiene feststellbar ist, und wenigstens eine Laufschiene an der Führungsschiene über ein Federglied im Sinne einer Verschiebung der Laufschienen nach vorn abgestützt ist.

Längsverstellvorrichtungen für Sitze der eingangs genannten Art sind in vielen Ausführungsformen bekannt, wie sie beispielsweise aus der DE 32 26 198 A1 oder aus der US 4 143 911 ersichtlich sind. Unabhängig davon, ob die Verschiebung des Sitzes gegenüber dem Fahrzeugboden nur der Längslageneinstellung des Sitzes dient, oder aber auch beim Einbau in zweitürige Personenkraftwagen der Schaffung eines größeren Einstiegraumes für Fondbenutzer dient, ist ein die Verschiebebewegung des Sitzes nach vorn unterstützendes Federelement - wie z.B. ein eigenelastisches Zugglied - in der Regel aber als Schraubenzugfeder ausgebildet, welche einerseits mit der den Sitz tragenden Laufschiene und andererseits entweder mit einem Anlenkpunkt des Fahrzeugbodens oder der bodenfesten Führungsschiene verbunden ist. Allerdings ist es auch bekannt Schraubendruckfedern einzusetzen, wobei dann die Anlenkpunkte entsprechend umgekehrt sind. Da für die Längsverschiebung des Sitzes ein relativ großer Federweg benötigt wird, gestaltet sich die Auswahl der Federn nach ihrer Federkennlinie insofern schwierig, als dass sowohl am Anfang als auch am Ende der Verschiebebewegung des Sitzes nur eine unwesentlich veränderte Kraft wirksam sein soll. Dies steht jedoch im Widerspruch zu den Kennlinien derartiger Schraubenzug- bzw. Schraubendruckfedern, die am Anfang des Federweges bei Null beginnen und bei zunehmendem Federweg bis zu dessen Ende kontinuierlich auf einen Maximalwert ansteigen. Zur Erzielung brauchbarer Kraftverhältnisse müssen derartige Federn viele Windungen aufweisen und sind daher von beträchtlicher Länge. Dies erfordert wiederum einen großen Platzbedarf für die Unterbringung solcher Schraubenzugfedern bzw. Schraubendruckfedern.

Aus der US-A-2 850 074 ist eine Sitzverstellvorrichtung ersichtlich, bei der ein Stützfuß am Fahrzeugboden festgelegt ist, der mit einer federungs- und stoßdämpfenden Einheit ausgestattet ist. Dieser Stützfuß weist an seinem Tragarm zwei im Abstand zueinander angeordnete Rollenpaare auf, um eine Längsverstellung des Sitzes zu ermöglichen. Dabei sind am Sitz festgelegte Schienen nach unten geneigt verlaufend angeordnet, so dass der Sitzbenutzer durch sein Körpergewicht bei Lösung der Sperrvorrichtung den Fahrzeugsitz unter Höhenverminderung seiner Sitzposition gegen die Kraft eines Federgliedes nach vorn verschieben kann. Erhebt sich dagegen der Sitzbenutzer bei gelöster Sperrvorrichtung, so sorgt das Federglied dafür, dass der Sitz schräg nach oben, entgegen der Fahrrichtung, zurückgezogen wird. Dieses Federglied ist als torsionsverspannte Feder (torsionally loaded spring) bezeichnet, während in den Ansprüchen immer nur die Rede von Mitteln ist, welche das Sitzelement im Sinne einer Rückwärtsbewegung beaufschlagen. Eine torsionsverspannte Feder könnte eine Bügelfeder, eine Drehfeder oder ein ähnliches Federglied sein. Diese Lösung besitzt keine Führungsschienenanordnung zur Längsverschiebung des Sitzes, bei der außerdem der Sitz nur in Verschieberichtung nach hinten federbelastet ist.

Aufgabe der Erfindung ist es, die Federeinrichtung zur Unterstützung der Verschiebebewegung des Sitzes nach vorne mit seiner Längsverstellvorrichtung hinsichtlich des Platzbedarfes und der Rückstellkraft zu verbessern. Diese Aufgabe ist erfindungsgemäß mit den im Patentanspruch 1 angegebenen Merkmalen gelöst. Da die Spiralfeder wenig Platz beansprucht und sich außerdem an einer wählbaren Stelle der Laufschiene mit ihrer Wickeltrommel festlegen lässt, wird für diese Art der Rückholfedereinrichtung kein nennenswerter Bauraum beansprucht. Außerdem lässt sich die Spiralfeder derart spannen, dass über ihren Nutzungsbereich nur ein geringer Kraftanstieg bzw. Kraftabfall wirksam wird. Dabei versteht es sich, dass die Spiralfeder statt der Laufschiene auch dem Fahrzeugboden bzw. der Führungsschiene zugeordnet werden kann, wenn der Fixpunkt des Seilzuges der Laufschiene entsprechend dem Rückstellsinn zugeordnet ist. Dabei ist die Spiralfeder als selbstabrollendes Bauteil mit ihrem einen Ende an der Führungsschiene und mit ihrem anderen Ende an der Laufschiene befestigt.

Eine platzsparende Anordnung der Rückholfedereinrichtung lässt sich erzielen, indem die Spiralfeder in einem Hohlraum der einen konstanten Wickeldurchmesser aufweisenden Wickeltrommel angeordnet ist und mit ihrem inneren Ende an einem der Laufschiene ortsfest zugeordneten Dorn angeordnet ist, auf dem die Wickeltrommel gelagert ist. Die Wickeltrommel kann jedoch auch einen unkonstanten Wickeldurchmesser aufweisen. Dabei lässt sich vorteilhaft eine Baueinheit schaffen, indem der Dorn fester, zentrischer Bestandteil eines die Wickeltrommel umgreifenden, dosenartigen Gehäuse ist, das an einem Außenumfang einen Schlitz zum Durchtritt des an der Wickeltrommel befestigten Zugseiles aufweist. Zur sicheren Verbindung des Gehäuses mit der Laufschiene mag das Gehäuse vorteilhaft an seiner Seitenwand einen Tragarm aufweisen, der mit Rastvorsprüngen Bohrungen in einer an der Laufschiene festgelegten Haltewange durchgreift.

Eine weitgehende verschmutzungsfreie Abkapselung der Baueinheit lässt sich erzielen, indem das Gehäuse durch einen die Spiralfeder und die Wickeltrommel abdeckenden Deckel verschließbar ist, wobei das Gehäuse zusammen mit der Spiralfeder und der Wickeltrommel eine Baueinheit bildet. In diesem Fall weist die Wickeltrommel an ihrem Innenumfang eine Aufnahme zur Festlegung des äußeren Endes der Spiralfeder auf, deren inneres Ende mit einer Abwinklung in einen Schlitz des von der Spiralfeder umfassten Dornes eingreift.

Die Erfindung ist in einem Ausführungsbeispiel auf der Zeichnung dargestellt und wird nachfolgend näher erläutert. Es zeigen:
- Fig. 1: das außenseitige Schienenpaar eines eine Längsverstellvorrichtung umfassenden Fahrzeugsitzes in einer Seitenansicht von der Sitzinnenseite her gesehen,
- Fig. 2: das aus Fig. 1 ersichtliche Schienenpaar mit der Sitzlängsverstellvorrichtung in einer Draufsicht,

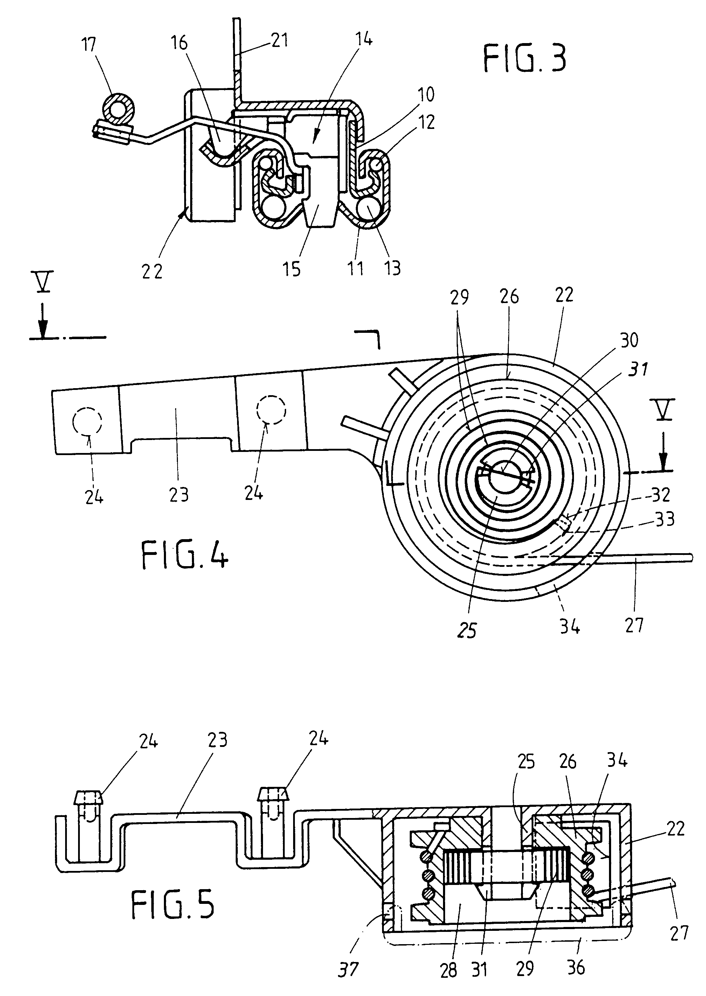

- Fig. 3: einen Querschnitt des Schienenpaares nach der Linie III - III von Fig. 1,
- Fig. 4: das die Spiralfeder und die Wickeltrommel aufnehmende Gehäuse bei abgenommenen Deckelteil in einer Fig. 1 analogen, jedoch gegenüber dieser vergrößerten Darstellung,
- Fig. 5: das aus Fig. 4 ersichtliche, die Wickeltrommel und die Spiralfeder aufnehmende Gehäuse in einer teilweise im Schnitt dargestellten Draufsicht nach der Linie V - V von Fig. 4.

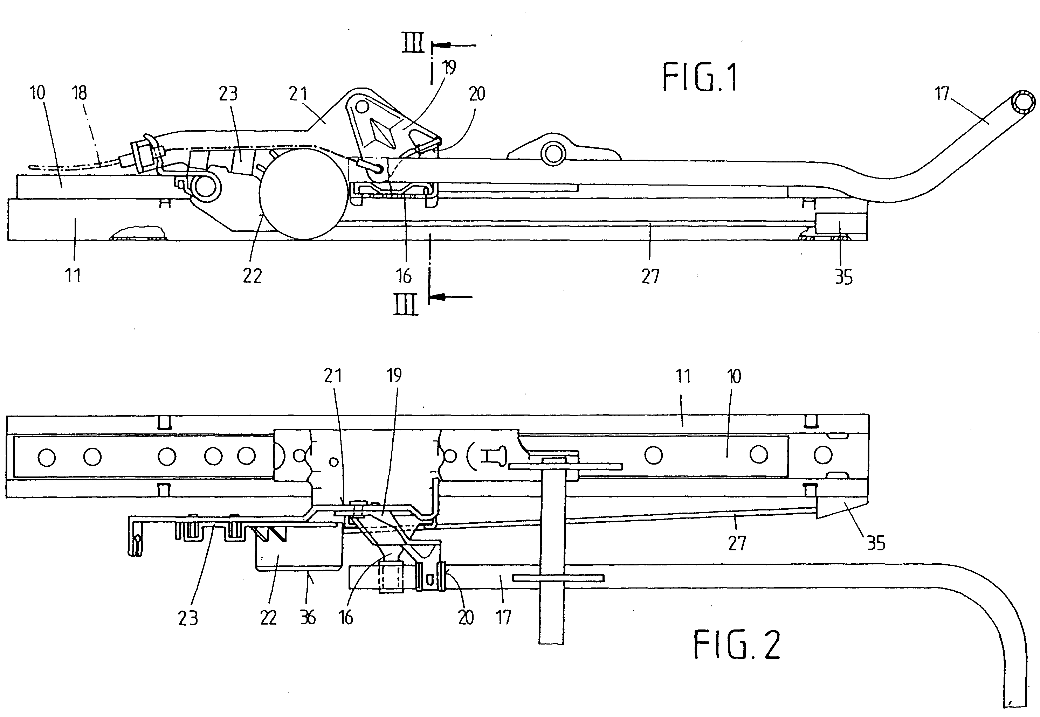

Die Unterseite eines nicht dargestellten Sitzrahmens ist auf beiden Sitzlängsseiten mit einer Laufschiene 10 verbunden, die in jeweils eine am Fahrzeugboden festgelegte Führungsschiene 11 eingreift und an dieser bei dem dargestellten Ausführungsbeispiel über Wälzkörper 12 und 13 längsverschiebbar abgestützt ist. Die Führungsschiene 11 weist an ihrem aufgewölbten Boden in Längsrichtung hintereinander abstandsweise angeordnete, nicht näher bezeichnete Durchbrüche auf, welche eine Zahnreihe bilden. In diese Durchbrüche greift wenigstens einer von mehreren Sperrklauen 15 ein, die Bestandteil einer an der Laufschiene 10 festgelegten Sperreinrichtung 14 sind, die durch einen ebenfalls an der Laufschiene 10 gelagerten Querhebel 16 gegen Federwirkung lösbar sind, indem ein ebenfalls an der Laufschiene 10 gelagerter Bügelhebel 17 betätigt wird. Die der Sitzlängsverstelleinrichtung zugehörige Sperreinrichtung 14 ist jedoch auch durch einen in bekannter Weise an der Rückenlehne angeordneten Betätigungshebel auslösbar, indem über einen Bowdenzug 18 ein Auslösehebel 19 derart gesteuert werden kann, dass dieser mit seinem Stützdaumen 20 über den Bügelhebel 17 den Querhebel 16 zur Lösung der Sperrklauen 15 niederdrückt. Dabei versteht es sich, dass auch gleichzeitig die Verriegelung zwischen dem nicht dargestellten Sitzteil und der ebenfalls nicht dargestellten Rückenlehne gelöst wird, so dass sowohl die Rückenlehne vorgeschwenkt werden kann, als auch die den Sitz tragende Laufschiene 10 nach vorn schiebbar ist. Der Auslösehebel 19 ist an einer Haltewange 21 gelagert, die als winkelförmig abgekröpfter Bauteil mit der Laufschiene 10 fest verbunden ist. Diese Haltewange 21 bildet an ihrem hinteren Ende ein Widerlager für den Bowdenzug 18 und nimmt andererseits ein dosenartiges Gehäuse 22 auf, das mit einem damit einstückig verbundenen Tragarm 23 an der Seitenwange 21 mittels deren Bohrungen durchgreifenden Rastvorsprüngen 24 festgelegt ist. Im Zentrum des dosenartigen Gehäuses 22 befindet sich ein zum Innenraum des Gehäuses achsartig vorspringender Dorn 25, auf dem eine Wickeltrommel 26 drehbar gelagert ist. An dieser Wickeltrommel ist ein Zugseil 27 befestigt, das in mehreren Windungen den Außenumfang der Wickeltrommel 26 umrunden kann. Bei der aus Fig. 5 ersichtlichen Darstellung sind alle Windungen der Wickeltrommel 26 mit dem Zugseil 27 belegt, was einer Lage des Sitzes in maximal vorgeschobener Stellung entspricht, so dass entgegen der Darstellung in den Fig. 1 und 2 die Laufschiene 10 gegenüber der Führungsschiene 11 nach vorn ausragt. Bei der Stellung der Laufschiene 10 in der Führungsschiene 11 gemäß den Fig. 1 und 2 ist das Zugseil 27 weitgehend von der Wickeltrommel 26 abgewickelt. Die einen zum Wickelumfang konzentrischen Hohlraum 28 aufweisende Wickeltrommel 26 nimmt in diesem Hohlraum eine Spiralfeder 29 auf, die mit einer Abwinklung 30 ihres inneren Endes einen Schlitz 31 des Dornes 25 durchgreift und an diesem festgelegt ist Das äußere Ende der Spiralfeder 29 ist zu einem Haken 33 abgebogen, und durchgreift eine Aufnahme 32 des Trommelmantels zur Festlegung an der Wickeltrommel 26. Das an der Wickeltrommel festgelegte Zugseil 27 durchgreift einen Schlitz 34 im Mantel des Gehäuses 22 und ist mit seinem freien Ende mittels eines Verbindungsstücks 35 am vorderen Ende der Führungsschiene 11 festgelegt. Zwecks Abkapselung von Wickeltrommel 26 und Spiralfeder 29 kann die frontseitige Öffnung des dosenartigen Gehäuses 22 durch einen in strichpunktierten Linien in Fig. 5 dargestellten Deckel 36 verschlossen werden. Dieser Deckel 36 kann, wie aus Fig. 5 entnehmbar ist, durch in Öffnungen im Mantel des Gehäuses eindringende Rastfinger 37 in seiner Verschlusslage gehalten werden.

Wird nun beim vorliegenden Ausführungsbeispiel der Sitz in Richtung nach hinten geschoben, so nimmt die Laufschiene 10 das Gehäuse 22 ebenfalls nach hinten mit, so dass das Zugseil 27 gegen die Kraft der Spiralfeder von der Wickeltrommel 26 abläuft. Je weiter nun die Laufschiene 10 nach hinten verschoben wird, desto mehr wird die Spiralfeder 29 gespannt. Dabei ist die Spannkraft der Spiralfeder so ausgelegt, dass sie bei von der Führungsschiene 11 gelösten Sperrklauen 15 den Vorlauf des Sitzes soweit unterstützt, dass die Bedienungsperson keine nennenswerte Kraft zum Vorschieben des Sitzes aufzuwenden braucht. Dabei dreht die Spiralfeder 29 die Wickeltrommel 26 in einer solchen Richtung, dass das Zugseil 27 auf den Mantel der Wickeltrommel unter gleichzeitigem Vorlauf der Laufschiene 10 aufgewickelt wird.

Wie bereits erwähnt, gibt die dargestellte und vorbeschriebene Ausführungsform die Erfindung nur beispielsweise wieder, die keinesfalls allein darauf beschränkt ist. Es sind vielmehr noch mancherlei Änderungen und Ausgestaltungen des Erfindungsgegenstandes denkbar. So versteht es sich, dass beispielsweise für den Fall, dass dies erwünscht ist eine Umkehrung der Bewegungsrichtungen möglich ist, indem die Spiralfeder 29 in entgegengesetzter Richtung gewickelt und arretiert ist, während auch das Zugseil 27 in entgegengesetzter Richtung von der Wickeltrommel ablaufen kann. Zur Beeinflussung hinsichtlich der Vergleichmäßigung der die Sitzbewegung unterstützenden Kraft kann die Außenkontur der Wickeltrommel 26 derart gestaltet sein, dass das Zugseil 27 stetig über einen sich zur Drehachse der Wickeltrommel ändernden Radius des Wickeltrommelmantels ab- bzw. aufgewickelt wird. Dazu könnte beispielsweise der Außenmantel der Wickeltrommel 26 auch konischen Verlauf aufweisen. Schließlich braucht auch die Spiralfeder nicht unbedingt im Hohlraum 28 der Wickeltrommel angeordnet zu sein, sondern kann dieser auch nebengeordnet werden. Ferner kann die Verbindung zwischen der Spiralfeder 29 und dem Gehäuse 22 bzw. dessen Dorn 25 auch in anderer als der dargestellten und zuvor beschriebenen Weise erfolgen. So ist es beispielsweise denkbar, zur Einstellung der Federspannung das innere Ende der Spiralfeder 29 an einer zum Gehäuse drehbaren, aber fixierbaren Hülse festzulegen, um während der Montage die gewünschte Federspannung einregeln zu können. Darüber hinaus ist die Befestigung des Deckels 36 nicht auf die vorbeschriebene Ausführungsform beschränkt, sondern der Deckel kann auch in anderer Weise als Verklipsen mit dem Gehäuse 22 verbunden sein, wie dies beispielsweise durch Verschrauben möglich ist. Auch ist die Befestigung des Gehäuses 22 an der Laufschiene 10 nicht auf die vorbeschriebene Ausführungsform beschränkt, sondern das Gehäuse 22 kann sowohl in seiner Form als auch in seiner Befestigungsart von der vorbeschriebenen Ausführung abweichen. Dabei ist es denkbar, dass das Gehäuse 22 der Laufschiene 10 auch durch Verschrauben, Vernieten od. dgl. befestigt sein kann. Schließlich ist es auch denkbar, das Gehäuse 22 mit der darin befindlichen Wickeltrommel 26 und der Spiralfeder 29 an der Führungsschiene oder auch am Boden des Fahrzeuges zu befestigen, wenn dann das Verbindungsstück 35 des Zugseiles 27 an der Laufschiene festgelegt ist.

### Bezugszeichenliste :

- 10: Laufschiene
- 11: Führungsschiene
- 12: Wälzkörper
- 13: Wälzkörper
- 14: Sperreinrichtung
- 15: Sperrklaue
- 16: Querhebel
- 17: Bügelhebel
- 18: Bowdenzug
- 19: Auslösehebel
- 20: Stützdaumen
- 21: Haltewange
- 22: Gehäuse
- 23: Tragarm
- 24: Rastvorsprung
- 25: Dorn
- 26: Wickeltrommel
- 27: Zugseil
- 28: Hohlraum
- 29: Spiralfeder
- 30: Abwinklung
- 31: Schlitz
- 32: Aufnahme
- 33: Haken
- 34: Schlitz
- 35: Verbindungsstück
- 36: Deckel
- 37: Rastfinger

## Patentansprüche

1. Längsverstellvorrichtung für Fahrzeugsitze, insbesondere Kraftfahrzeugsitze, deren mit einer in wählbaren Neigungslagen einstellbare Rückenlehne mit einem Sitzteil schwenkbar verbunden ist, und der Sitzteil an Laufschienen (10) befestigt ist, wobei jede Laufschiene (10) in einer am Fahrzeugboden festgelegten Führungsschiene (11) längsverschiebbar ist und wenigstens eine Laufschiene (10) mittels einer Sperreinrichtung (14) auslösbar an der Führungsschiene (11) feststellbar ist, und wenigstens eine Laufschiene (10) an der Führungsschiene (11) über ein Federglied zur Verschiebung nach vorn abgestützt ist, wobei als Federglied eine mit ihrem einen Ende der Laufschiene (10) und mit ihrem anderen Ende der Führungsschiene (11) zugeordnete Spiralfeder (29) eingesetzt ist, deren der Führungsschiene zugeordnetes Ende an einer an der Laufschiene (10) drehbar gelagerten Wickeltrommel (26) gehaltert ist, an der das eine Ende eines Zugseiles (27) festgelegt ist, dessen anderes Ende am vorderen Bereich der Führungsschiene (11) festgelegt ist.

2. Längsverstellvorrichtung nach Anspruch 1, dadurch gekennzeichnet,daß die Spiralfeder (29) in einem Hohlraum (28) der einen konstanten Wickeldurchmesser aufweisenden Wickeltrommel (26) angeordnet ist und mit ihrem inneren Ende an einem der Laufschiene (10) ortsfest zugeordneten Dorn (25) angeordnet ist, auf welchem die Wickeltrommel (26) gelagert ist.

3. Längsverstellvorrichtung nach Anspruch 1, dadurch gekennzeichnet, daß die Wickeltrommel (26) einen unkonstanten Wickeldurchmesser aufweist.

4. Längsverstellvorrichtung nach Anspruch 2 oder 3, dadurch gekennzeichnet, daß der Dorn (25) fester, zentrischer Bestandteil eines die Wickeltrommel (26) umgreifenden, dosenartigen Gehäuses (22) ist, das an seinem Außenumfang einen Schlitz (34) zum Durchtritt des an der Wickeltrommel (26) befestigten Zugseiles (27) aufweist.

5. Längsverstellvorrichtung nach Anspruch 4, dadurch gekennzeichnet, daß das Gehäuse (22) an seiner Seitenwand einen Tragarm (23) aufweist, der mit Rastvorsprüngen (24) Bohrungen in einer an der Laufschiene (10) festgelegten Haltewange (21) durchgreift.

6. Längsverstellvorrichtung nach Anspruch 4 oder 5, dadurch gekennzeichnet, daß das Gehäuse (22) durch einen die Spiralfeder (29) und die Wickeltrommel (26) abdeckenden Deckel (36) verschließbar ist und zusammen mit der Spiralfeder (29) und der Wickeltrommel (26) eine Baueinheit bildet.

7. Längsverstellvorrichtung nach einem der Ansprüche 2 bis 6, dadurch gekennzeichnet, daß die Wickeltrommel (26) an ihrem Innenumfang eine Aufnahme (32) zur Festlegung des äußeren Endes der Spiralfeder (29) aufweist, deren inneres Ende mit einer Abwinklung in einen Schlitz (31) des von der Spiralfeder (29) umfaßten Dornes (25) eingreift.

8. Längsverstellvorrichtung nach einem der vorhergehenden Ansprüche 2 bis 7, dadurch gekennzeichnet, daß das innere Ende der Spiralfeder (29) an einem auf dem Dorn (25) oder im Gehäuse (22) drehbar gelagerten, aber fixierbaren Einstellelement festgelegt ist.

## Claims

1. Longitudinal adjusting arrangement for vehicle seats, in particular motor vehicle seats, whose backrest, which can be set in selectable positions of inclination, is pivotably connected to a seating part, and the seating part is attached to slide rails (10), wherein each slide rail (10) is longitudinally displaceable in a guide rail (11) secured to the vehicle floor and at least one slide rail (10) can be fixed by means of a locking device (14) to the guide rail (11) in a releasable manner, and at least one slide rail (10) is supported at the guide rail (11) via a spring member so as to be displaced forwards, wherein the spring member which is used is a spiral spring (29) which is associated by way of one end with the slide rail (10) and by way of the other end with the guide rail (11) and whose end which is associated with the guide rail is fastened to a winding drum (26) which is rotatably mounted on the slide rail (10) and to which one end of a traction cable (27) is secured, the other end of which is secured to the front region of the guide rail (11).

2. Longitudinal adjusting arrangement according to Claim 1, characterised in that the spiral spring (29) is disposed in a hollow space (28) in the winding drum (26), which has a constant winding diameter, and is disposed by way of its inner end on a pin (25) which is associated in a stationary manner with the slide rail (10) and on which the winding drum (26) is mounted.

3. Longitudinal adjusting arrangement according to Claim 1, characterised in that the winding drum (26) has an inconstant winding diameter.

4. Longitudinal adjusting arrangement according to Claim 2 or 3, characterised in that the pin (25) is a fixed, central component of a box-like housing (22) which encompasses the winding drum (26) and comprises at its outer circumference a slot (34) for the passage of the traction cable (27) attached to the winding drum (26) .

5. Longitudinal adjusting arrangement according to Claim 4, characterised in that the housing (22) comprises at its side wall a supporting arm (23) which passes by way of locking projections (24) through holes in a holding side piece (21) secured to the slide rail (10).

6. Longitudinal adjusting arrangement according to Claim 4 or 5, characterised in that the housing (22) can be closed by a lid (36) which covers the spiral spring (29) and the winding drum (26) and forms a construction unit with the spiral spring (29) and the winding drum (26) .

7. Longitudinal adjusting arrangement according to any one of Claims 2 to 6, characterised in that the winding drum (26) comprises at its inner circumference a receptacle (32) for securing the outer end of the spiral spring (29), the inner end of which engages by way of a bent portion in a slot (31) in the pin (25) embraced by the spiral spring (29).

8. Longitudinal adjusting arrangement according to any one of the preceding Claims 2 to 7, characterised in that the inner end of the spiral spring (29) is secured to a setting element which is rotatably mounted on the pin (25) or in the housing (22), yet can be fixed.

## Revendications

1. Dispositif de réglage longitudinal pour des sièges de véhicule, en particulier des sièges de véhicule automobile, dans lequel un dossier réglable en inclinaison au choix de l'opérateur est relié de façon pivotante à une partie de siège tandis que la partie de siège est fixée sur des rails de déplacement (10), dont chacun est susceptible de coulisser longitudinalement sur des rails de guidage (11) fixés au plancher du véhicule, et dans lequel au moins un rail de déplacement (10) est susceptible d'être fixé de façon amovible sur le rail de guidage (11) au moyen d'un organe de blocage (14) et au moins un rail de déplacement (10) est appuyé sur le rail de guidage (11) via un organe élastique pour coulisser vers l'avant, dans lequel est inséré comme organe élastique un ressort spiral (29) associé par l'une de ses extrémités au rail de déplacement (10) et par l'autre extrémité au rail de guidage (11), et dont l'extrémité associée au rail de guidage est retenue dans un tambour d'enroulement (26) monté rotatif sur le rail de déplacement (10) et à une extrémité duquel est fixée un câble de traction (27) dont l'autre extrémité est fixée à la joue avant du rail de guidage (11).

2. Dispositif de réglage longitudinal selon la revendication 1, caractérisé en ce que le ressort spiral (29) est disposé dans un espace creux (28) d'un tambour d'enroulage (26) présentant un diamètre d'enroulage constant et est monté par son extrémité intérieure sur une broche (25) associée localement au rail de déplacement (10) et sur laquelle est monté à rotation le tambour d'enroulage (26).

3. Dispositif de réglage longitudinal selon la revendication 1, caractérisé en ce que le tambour d'enroulage (26) présente un diamètre d'enroulage non constant.

4. Dispositif de réglage longitudinal selon la revendication 2 ou 3, caractérisé en ce que la broche (25) constitue un composant fixé et centré d'un corps (22) en forme de boîtier entourant le tambour d'enroulage (26) et qui comporte à sa périphérie une fente (34) pour le passage de traversée du câble de traction (27) fixé au tambour d'enroulage (26).

5. Dispositif de réglage longitudinal selon la revendication 4, caractérisé en ce que le corps (22) comporte sur sa paroi latérale un bras de support (23) qui traverse et accroche par des saillies de verrouillage (24) des alésages ménagés dans une joue de retenue (21) fixée au rail de déplacement (10).

6. Dispositif de réglage longitudinal selon la revendication 4 ou 5, caractérisé en ce que le corps (22) est susceptible d'être fermé par un couvercle (36) recouvrant le ressort spiral (29) et le tambour d'enroulage (26) et forme avec le ressort spiral (29) et le tambour d'enroulage (26) un composant de montage.

7. Dispositif de réglage longitudinal selon l'une des revendications 2 à 6, caractérisé en ce que le tambour d'enroulage (26) comporte à sa périphérie intérieure une cavité de réception (32) pour la fixation de l'autre extrémité du ressort spiral (29) dont l'extrémité intérieure s'engage par une partie repliée dans une fente (31) de la broche (25) entourée du ressort spiral (29).

8. Dispositif de réglage longitudinal selon l'une des revendications précédentes 2 à 7, caractérisé en ce que l'extrémité intérieure du ressort spiral (29) est fixée à un élément de réglage monté rotatif mais susceptible d'être bloqué sur la broche (25) ou dans le corps (22).
